# EUROPEAN PATENT APPLICATION

(11) **EP 1 049 347 A1**
(43) Date of publication of application: **02.11.2000**
(21) Application number: 99108205.8
(22) Date of filing: 27.04.1999
(51) Int. Cl.: H04Q 7/32, H04M 1/60

(54) **A method and device for establishing a connection between a communication system, particularly a mobile phone, and a corresponding kit**

(71) Applicant: ROBERT BOSCH GMBH, 70442 Stuttgart (DE)
(72) Inventor: Pedersen, Jens Erik, 9000 Alborg (DK); Pedersen, Karsten Aarrebo, 9320 Alborg (DK)

(57) **Abstract**

The present invention provides a method and device for establishing a connection between a communication system, particularly a mobile phone, and a corresponding kit, particularly a corresponding carkit. According to the invention, a radio link between the mobile phone and the kit is provided; and said connection is established by a communication between the mobile phone and the kit over said radio link.

## Description

### BACKGROUND OF THE INVENTION

The present invention relates to a method and device for establishing a connection between a communication system, particularly a mobile phone, and a corresponding kit, particularly a carkit.

Although applicable to any communication system, the present invention and its underlying problems will be discussed with particular reference to GSM digital mobile phone systems.

In general, the expression kit refers to any kind of external equipment or accessoires of mobiles, such as carkits, keyboards, other input/output devices.

As one example, carkits for mobile phones are very well known today, and almost every mobile manufacturer supports such carkits.

Usually, the carkit comprises a mechanical holder or craddle having an electrical connector to be connected to the mechanically fixed mobile. Via cables, the connector provides a connection of the mobile to a power supply, a speaker, a microphone, an external kexboard, a preamplifier and an external antenna, all installed in or on the automobile.

A disadvantage of this known solution is that the mechanical holder has to be placed in the front of the passenger room near the dashboard and can be a danger in case of an accident.

Moreover, the mobile has to be installed and uninstalled when the user enters or leaves the automobile.

A situation when the user has forgotten to install the mobile can be dangerous when he tries to make a phone call without connection to the holder and connector or when he tries to establish such a connection during driving.

As another example, the man-machine-interface between the user and the mobile phone is done by either one or more of the following three ways, a keyboard system on the mobile phone itself, a wire communication, or an infrared connection from a controlling means, such as a personal computer or other, to the mobile phone.

These three methods have the following disadvantages. When using a keyboard, the user has to have the mobile phone in reach of the hands. When using a wire communication, there a physical connection to the host is required. When using an infrared connection, the mobile has to be in near vicinity and in infrared-transparent contact to the controlling means, f.e. some centimeters to meters depandant on the specific type of infrared connection.

Especially in moving vehicles, the problem is that the user has to reach to a craddle where the mobile is fixed in order to dial a number.

### SUMMARY OF THE INVENTION

The present invention provides method and device for establishing a connection between a communication system, particularly a mobile phone, and a corresponding kit according to claim 1 and 5, respectively.

A particular advantage of the method and device according to the invention is that the kit will automatically and in a mechanically contactless way communicate with its host.

In case of a carkit, it will detect the mobile and route all communication or ingoing and outgoing calls to and from the mobile to the carkit when the phone is in or near the car. No interaction of the user is required for logging in. After having logged in this way, the carkit has total control of the mobile.

The principal idea underlying the present is to have a dedicated radio link between a communication system, particularly a mobile phone, and a kit belonging to said mobile phone over which the log in and use is negotiated.

Further advantages are that the mobile phone does not have to be fixed on the dashboard, and that the phone can be left in a pocket or a bag during driving.

Preferred embodiments of the present invention are listed in the dependent claims.

According to a preferred embodiment, a radio signal is sent from at least one of the mobile phone and the kit, said radio signal carrying a log in message. Thus, the communication is initialized easily.

According to a further preferred embodiment said radio signal is automatically sent in predetermined intervals. This has the advantage that the connection may be established without an interaction of the driver.

According to a further preferred embodiment at least one of the mobile phone and the kit has a user list for indicating allowed users. This has the advantage that the connection may be established only for allowed kits or allowed users.

According to a further preferred embodiment said kit includes a carkit comprising at least one of a speaker, a microphone, an keyboard, a display, a preamplifier and an antenna.

According to a further preferred embodiment said radio link is a Bluetooth link, preferably having a range in the order of 10 m. Bluetooth is the codename for a technology specification for small form factor, low-cost, short range radio links between mobile communication devices.

This is a specially developped radio link for short distances, where no line of sight is required. Moreover, this standard advantageously includes a unique ID number on every device which allows a unique identification.

According to a further preferred embodiment said kit comprises a man-machine interface for receiving and transmitting commands input by the user. This could be a touch screen on the dashboard in the field of view of the driver which enables the driver to keep track of the traffic while simultaneously dialing a phone number or otherwisely accessing the mobile phone.

According to a further preferred embodiment said man-machine interface is designed for speech recognition for translating said commands. Using speech recognition, it is possible to make a phone call without using a pushbutton at all, namely neither on the mobile phone nor on the dashboard.

### BRIEF DESCRIPTION OF THE DRAWINGS

The present invention will become more fully understood by the following detailed description of preferred embodiments thereof in conjunction with the accompaying drawings, in which:
- Fig. 1: a schematic illustration of a mobile phone and a carkit having a radio link device for establishing a connection therebetween according to an embodiment of the invention; and
- Fig. 2: a flow diagram of a method for establishing a connection between the mobile phone and the carkit of Fig. 1 according to another embodiment of the invention.

### DESCRIPTION OF THE PREFERRED EMBODIMENTS

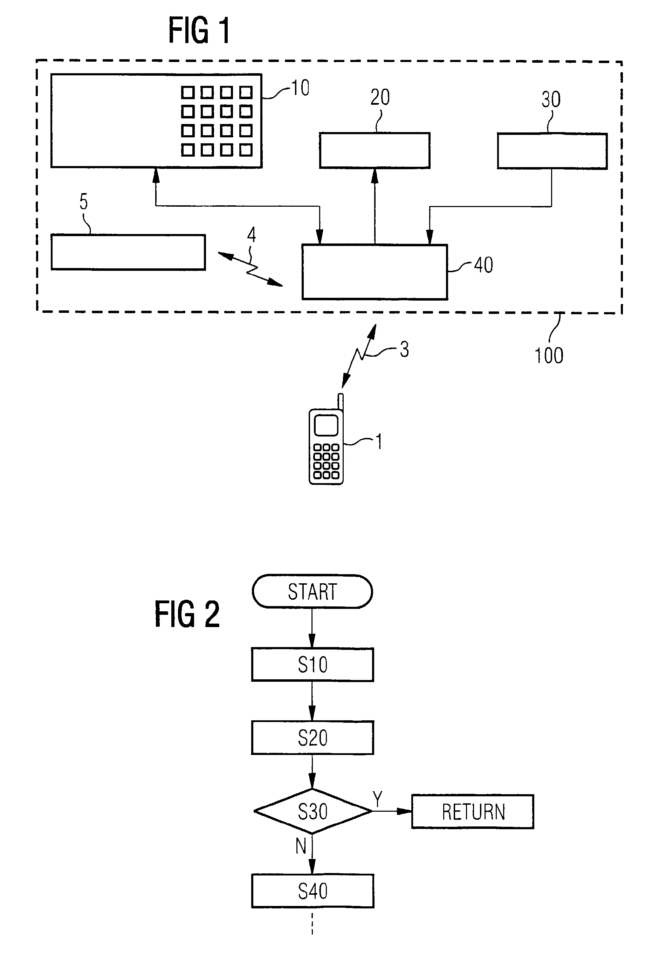

Fig. 1 is a schematic illustration of a mobile phone and a carkit having a radio link device for establishing a connection therebetween according to an embodiment of the invention.

In Fig. 1 reference sign 100 denotes a carkit, 10 a control touch screen, 20 a speaker, 30 a microphone, 40 a hands free box, 1 a mobile phone, 5 a IR control, 3 a RF signal, and 4 a IR signal.

For the communication using the RF signal 3, the mobile phone 1 and the hands free box 40 have a respective RF transceiver (not shown). For the communication using the IR signal 4, the IR control 5 and the hands free box 40 have also a respective IR transceiver (not shown).

The carkit 100 is installed at and around the dashboard of a vehicle. According to the embodiment, the mobile logs in the carkit control over the radio link using the RF signal 3. Thereafter, the control can be fully done by the carkit elements such that the user can concentrate on the traffic. If the car has a display based GPS (global positioning system) navigation system, the same display could be used by the mobile phone.

Numbers or commands can be input in the control touch screen 10. Moreover, the transfer of commands or speech data can also be made by a wireless connection to the hands free box 40, namely be a speech recognition module installed therein. Finally, a remote control by the infra-red signal 5 from the infra-red control 5 is also possible.

When a connection has been made, the speech will be transferred over the speaker 20 and the microphone 30.

A security function in the Bluetooth system which is preferably used as radio link prohibits unauthorized use of the radio link.

Fig. 2 is a flow diagram of a method for establishing a connection between the mobile phone and the carkit of Fig. 1 according to another embodiment of the invention.

According to this embodiment, a connection between the mobile phone 1 and the carkit is established by the following steps.

In step S10, a radio signal 3 is sent from the mobile phone to the carkit 100, said radio signal 3 carrying a log in message having a unique identification code. Said radio signal 3 is automatically sent in predetermined intervals.

If the user of the mobile phone approaches or enters the car, the carkit 100 can receive this radio signal 3, namely if the mobile phone 1 is near or in the car without being mechanically conncted therewith, then in step 20 it checks in user list for indicating allowed user identification. If there is no match in step S30, the carkit 100 does not change its state and returns. If there is a match in step S30, then in step S40 a connection between the mobile phone 1 and the carkit 100 over said radio link is established and all the control of the mobile phone 1 is transferred to the carkit 100.

Now the user can make or receive phone calls without having to touch the mobile phone 1 itself, as explained above with reference to Fig. 1.

Although the present invention has been described with respect to preferred embodiments thereof, it should be understood that many modifications can be performed without departing from the scope of the invention as defined by the appended claims.

Particularly, the invention is not limited to GSM mobile phones but can be applied to any mobile phone system or any communication system.

## Claims

1. A method for establishing a connection between a communication system, particularly a mobile phone, and an external kit, particularly a corresponding carkit, comprising the steps of:
providing a radio link between the communication system and the kit; and
establishing said connection by a communication between the communication system and the kit over said radio link.

2. The method according to claim 1, wherein a radio signal is sent from at least one of the communication system, particularly the mobile phone, and the kit, said radio signal carrying a log in message.

3. The method according to claim 2, wherein said radio signal is automatically sent in predetermined intervals.

4. The method according to one of the preceding claims, wherein at least one of the communication system, particularly the mobile phone and the kit has a user list for indicating allowed users.

5. A device for establishing a connection between a communication system, particularly a mobile phone, and a corresponding kit, particularly a corresponding carkit, comprising:
a radio link having one station in the communication system and another station in the kit; and
a communication means for establishing said connection by making a communication between the station in the communication system and the station in the kit over said radio link.

6. The device according to claim 5, wherein said kit includes a carkit comprising at least one of a speaker, a microphone, an keyboard, a display, a preamplifier and an antenna.

7. The device according to claim 5 or 6, wherein said radio link is a Bluetooth link, preferably having a range in the order of 10 m.

8. The device according to one of claims 5 to 7, wherein said kit comprises a man-machine interface for receiving and transmitting commands input by the user.

9. The device according to one of claims 5 to 8, wherein said man-machine interface is designed for speech recognition for translating said commands.
